# EUROPEAN PATENT APPLICATION

(11) **EP 0 668 704 A2**
(43) Date of publication of application: **23.08.1995**
(21) Application number: 95300903.2
(22) Date of filing: 14.02.1995
(51) Int. Cl.: H04N 9/797, H04N 9/83

(54) **Video signal transmission system**

(30) Priority: 18.02.1994 JP 45033/94; 25.02.1994 JP 53319/94; 15.06.1994 JP 156546/94; 30.06.1994 JP 171774/94
(71) Applicant: VICTOR COMPANY OF JAPAN, LIMITED, Kanagawa-ku Yokohama (JP)
(72) Inventor: Yamada, Hiroshi, Shinagawa-ky, Tokyo (JP)
(74) Representative: Leeming, John Gerard

(57) **Abstract**

A video signal recording apparatus serves to record an input video signal on a recording medium. The input video signal contains a main signal having video information, a helper signal having added information for improving a quality of the main signal. and an identification signal for identifying a type of the added information. In the video signal recording apparatus, a first device is operative for generating a control signal related to a type of added information unsuited to record. A second device is operative for rewriting and disabling at least part of the identification signal in response to the control signal. A third device is operative for recording an output signal of the second device on the recording medium.

## Description

This invention relates to a video signal transmission system. a high-quality television receiver (an extended definition television receiver). a video signal recording apparatus, a video signal recording and reproducing apparatus. and a video signal indicating apparatus.

EDTV (extended definition television) systems compatible with the current television systems are advantageous in the quality of reproduced images. One of the EDTV systems is a "PALplus" system which can improve the quality of a reproduced image relative to the current PAL (phase alternation by line) system.

The PALplus system is compatible with the current PAL system. Accordingly, a television signal of the PALplus system can be handled by a television receiver of the current PAL system. The PALplus system is designed for a wide aspect. Specifically, the PALplus system corresponds to an aspect ratio of 16:9 while the current PAL system is 4:3 in aspect ratio.

The PALplus system uses a letter box to transmit a 16:9 picture within a 4:3 broadcast frame. According to the letter box format, a 16:9 picture is sandwiched between black bars at top and bottom regions of a 4:3 broadcast frame. The black bars are filled with a vertical helper signal designed to improve the vertical definition of the 16:9 picture.

In the PALplus system, an identification signal is inserted in a time portion of a television signal which corresponds to a given line in a field (or a frame). The identification signal contains information representing the type of a helper signal in the television signal. and information representing an aspect ratio related to the television signal.

The identification signal has a sequence of plural bits interposed in a time segment of a television signal which corresponds to a part of the 23-rd line of a first field. The bits of the identification signal are assigned to various information pieces.

According to one example of the assignment, the first to fourth bits of the identification signal represent the aspect ratio (discrimination among an aspect ratio of 16:9, an aspect ratio of 14:9, and an aspect ratio of 4:3) and also the format of the television signal (discrimination between a full format and a letter box). The fifth bit of the identification signal represents the type of a video signal source (discrimination between a camera mode and a film mode). The sixth to eighth bits of the identification signal represent an image-quality improving function. For example, the sixth to eighth bits contain information related to a caption. The ninth to eleventh bits of the identification signal are reserved for extension.

Each bit of the identification signal has a period of 1,200 nsec which corresponds to a frequency of 833 KHz. Six successive 200-nsec clock periods compose a 1-bit period. In the case where a bit of the identification signal represents a logic state of "0", a signal level changes from a low level to a high level during a related 1-bit period. In the case where a bit of the identification signal represents a logic state of "1", a signal level changes from a high level to a low level during a related 1-bit period. Thus, each bit of the identification signal is incorporated into a television signal through bi-phase modulation.

In some cases, a television signal of the PALplus system contains information of a caption. A tele-text signal related to the information of the caption has a frequency band of about 3.5 MHz which is wider than a transmission band, about 3 MHz, in a typical home-use VTR (video tape recorder). Accordingly, if the tele-text signal is recorded and reproduced into and from a recording medium by such a VTR, the quality of the resultant tele-text signal is deteriorated. The deteriorated tele-text signal tends to interfere with an image indicated on a screen of a television receiver.

The maximum frequency of the identification signal is equal to 833 KHz. Accordingly, the identification signal can be transmitted through a typical home-use VTR without being deteriorated in quality.

Another of the EDTV systems is a "Q-PAL" system compatible with the current PAL system. A modification of the Q-PAL system is a "Color plus" system proposed by a German electrical-appliance maker, Grundig company.

The Color plus system is designed to remove crosstalk between a luminance signal and a color signal. At a transmitter side of the Color plus system, a color signal is subjected to a PAL modulation process, and an improved vertical-temporal filter (a three-dimensional pre-combing filter) previously removes luminance signal components which will enter the frequency band of a resultant PAL modulation signal. The improved vertical-temporal filter removes higher-frequency luminance signal components (crosstalk luminance signal components).

It is a first object of this invention to provide an improved video signal transmission system.

It is a second object of this invention to provide an improved high-quality television receiver (an improved extended definition television receiver).

It is a third object of this invention to provide an improved video signal recording apparatus.

It is a fourth object of this invention to provide an improved video signal recording and reproducing apparatus.

It is a fifth object of this invention to provide an improved video signal indicating apparatus.

A first aspect of this invention provides a video signal recording apparatus for recording an input video signal on a recording medium, the input video signal containing a main signal having video information, a helper signal having plural added information pieces for improving a quality of the main signal, and an identification signal for identifying types of the added information pieces, the apparatus comprising first means for generating a control signal related to a type of an added information piece unsuited to record; second means for rewriting and disabling at least part of the identification signal in response to the control signal; and third means for recording an output signal of the second means on the recording medium.

A second aspect of this invention provides a video signal recording apparatus for recording an input video signal on a recording medium, the input video signal containing a main signal having video information, a helper signal having plural added information pieces for improving a quality of the main signal, and an identification signal for identifying types of the added information pieces, the identification signal having a sequence of plural bits and being inserted into a time segment of the input video signal which corresponds to a given line, the apparatus comprising first means responsive to the input video signal for detecting the time segment of the input video signal which corresponds the given line and which contains the identification signal; second means for generating a control signal related to a given bit among the bits of the identification signal, the given bit representing a type of an added information piece unsuited to record; third means for detecting a position of the given bit in the given line detected by the first means in response to the control signal; fourth means for rewriting and disabling the identification signal at only the bit position detected by the third means; and fifth means for recording an output signal of the fourth means on the recording medium.

A third aspect of this invention provides a video signal recording and reproducing apparatus for recording and reproducing an input video signal on and from a recording medium, the input video signal containing a main signal having video information, a helper signal having plural added information pieces for improving a quality of the main signal, and an identification signal for identifying types of the added information pieces, the apparatus comprising first means for generating a control signal related to a type of an added information piece unsuited to record; second means for rewriting and disabling at least part of the identification signal in response to the control signal; third means for recording an output signal of the second means on the recording medium; and fourth means for reproducing the recorded signal from the recording medium.

A fourth aspect of this invention provides a video signal recording and reproducing apparatus for recording and reproducing an input video signal on and from a recording medium, the input video signal containing a main signal having video information, a helper signal having plural added information pieces for improving a quality of the main signal, and an identification signal for identifying types of the added information pieces, the apparatus comprising first means for generating a control signal related to a type of an added information piece unsuited to record; second means for rewriting and disabling at least part of the identification signal in response to the control signal; third means for recording an output signal of the second means on the recording medium; fourth means for reproducing the recorded signal from the recording medium; and fifth means for selecting one of the input video signal and the signal reproduced by the fourth means, and outputting the selected signal.

A fifth aspect of this invention provides a video signal recording and reproducing apparatus for recording and reproducing an input video signal on and from a recording medium, the input video signal containing a main signal having video information, a helper signal having plural added information pieces for improving a quality of the main signal, and an identification signal for identifying types of the added information pieces, the apparatus comprising first means for generating a control signal related to a type of an added information piece unsuited to record; second means for rewriting and disabling at least part of the identification signal in response to the control signal; third means for recording an output signal of the second means on the recording medium; fourth means for reproducing the recorded signal from the recording medium; and fifth means for selecting one of the input video signal, the signal reproduced by the fourth means, and the output signal of the second means, and outputting the selected signal.

A sixth aspect of this invention provides a video signal indicating apparatus for an input video signal containing a main signal having video information, a helper signal having plural added information pieces for improving a quality of the main signal, and an identification signal for identifying types of the added information pieces, the apparatus comprising a display; first means for visualizing the input video signal on the display; second means for detecting the identification signal in the input video signal; third means for generating a control signal in response to the identification signal detected by the second means; fourth means for changing an effective indication area of the visualization of the input video signal on the display in response to the control signal; fifth means for disabling the input video signal and converting the input video signal into a video mute signal; and sixth means for selecting one of the input video signal and the video mute signal in response to the control signal, and outputting the selected signal to the display.

A seventh aspect of this invention provides an apparatus comprising first means for recording a video signal on a recording medium, the video signal containing an identification signal representing a type of the video signal; and second means for changing the identification signal before the identification signal contained in the video signal is recorded by the first means.

An eighth aspect of this invention provides an apparatus comprising first means for detecting presence and absence of a change of an input video signal between a PAL video signal and a PALplus video signal occurs, and generating a control signal representative thereof; second means for generating a video mute signal; and third means connected to the second means and being responsive to the control signal generated by the first means for visualizing the video mute signal when the first means detects the presence of the change, and for visualizing the input video signal when the first means detects the absence of the change.

A ninth aspect of this invention provides a video signal transmission system for transmitting a video signal to an extended definition television receiver via a video signal recording and reproducing apparatus which comprises first means for detecting whether or not the video signal contains an identification signal; second means for detecting whether or not the identification signal represents that the video signal is of an extended definition type and is unsuited to transmission to the extended definition television receiver via the video signal recording and reproducing apparatus; third means for, in cases where the first means detects that the video signal contains the identification signal and where the second means detects that the identification signal represents that the video signal is of the extended definition type and is unsuited to transmission to the extended definition television receiver via the video signal recording and reproducing apparatus, rewriting the identification signal into a state representing that the video signal is not of the extended definition type during one of recording and reproduction of the video signal by the video signal recording and reproducing apparatus; and fourth means for transmitting the video signal with the rewritten identification signal to the extended definition television receiver; wherein the rewritten identification signal causes the extended definition television receiver from executing extended definition processing on the video signal.

A tenth aspect of this invention provides a video signal transmission system for transmitting a video signal to an extended definition television receiver via a video signal recording and reproducing apparatus which comprises first means for detecting whether or not the video signal contains an identification signal; second means for detecting whether or not the identification signal is in a first state representing that the video signal is of an extended definition type and is unsuited to transmission to the extended definition television receiver via the video signal recording and reproducing apparatus; third means for, in cases where the first means detects that the video signal contains the identification signal and where the second means detects that the identification signal is in the first state, rewriting the identification signal into a second state representing that the video signal is not of the extended definition type during recording of the video signal by the video signal recording and reproducing apparatus; fourth means for removing a time-base variation component from the video signal which has been reproduced by the video signal recording and reproducing apparatus; fifth means for returning the identification signal in the output video signal of the fourth means to the first state; and sixth means for transmitting the video signal from the fifth means to the extended definition television receiver; wherein the identification signal in the first state enables the extended definition television receiver to execute extended definition processing on the video signal.

An eleventh aspect of this invention provides an extended definition television receiver comprising first means for receiving an RF extended definition television signal and converting the received RF extended definition television signal into an extended definition video signal; second means for selecting one of the extended definition video signal outputted from the first means and a video signal fed from an external apparatus, and outputting the selected video signal; third means for detecting an identification signal in the output video signal of the second means; fourth means for executing extended definition processing on the output video signal of the second means in response to detection of the identification signal by the third means; fifth means for selecting one of the output video signal of the second means and the output video signal of the fourth means, and outputting the selected video signal; and sixth means for visualizing the output video signal of the fifth means.

A twelfth aspect of this invention provides a video signal transmission system for transmitting a video signal from a video signal recording and reproducing apparatus which comprises first means for removing a time-base variation component from the output video signal of the video signal recording and reproducing apparatus, wherein the output video signal of the video signal recording and reproducing apparatus contains an identification signal in a first state representing that the video signal is not of an extended definition type; second means for rewriting the identification signal in the output video signal of the first means to a second state representing that the video signal is of the extended definition type; and third means for transmitting the video signal from the second means as a transmission-system output signal.

Fig. 1 is a block diagram of a video signal recording and reproducing apparatus according to a first embodiment of this invention.

Fig. 2 is a time-domain diagram of the waveforms of signals in the video signal recording and reproducing apparatus of Fig. 1.

Fig. 3 is a time-domain diagram of the waveforms of signals in the video signal recording and reproducing apparatus of Fig. 1.

Fig. 4 is a time-domain diagram of a time segment of an identification signal which corresponds to one bit.

Fig. 5 is a block diagram of a video signal recording and reproducing apparatus according to a second embodiment of this invention.

Fig. 6 is a block diagram of a video signal indicating apparatus according to a third embodiment of this invention.

Fig. 7 is a time-domain diagram of signals and indicating conditions of a CRT in the video signal indicating apparatus of Fig. 6.

Fig. 8 is a home-use video tape recorder (VTR) for the current PAL system.

Fig. 9 is a video signal transmission system according to a fourth embodiment of this invention.

Fig. 10 is a block diagram of a television receiver which can handle both a normal PAL signal and a Color plus signal.

Fig. 11 is a block diagram of a video signal transmission system according to a fifth embodiment of this invention.

Fig. 12 has a time-domain diagram of a time segment of a Color plus signal which corresponds to the 23-rd line of a first field, and also a diagram of conditions of rewriting a given bit of an identification signal from a logic state of "1" to a logic state of "0".

Fig. 13 is a time-domain diagram of a Color plus signal containing a mute identification signal held at a pedestal level.

Fig. 14 is a block diagram of a video signal transmission system according to a sixth embodiment of this invention.

Fig. 15 is a block diagram of a video signal transmission system according to a seventh embodiment of this invention.

Fig. 16 is a block diagram of an extended definition television receiver according to an eighth embodiment of this invention.

### First Embodiment

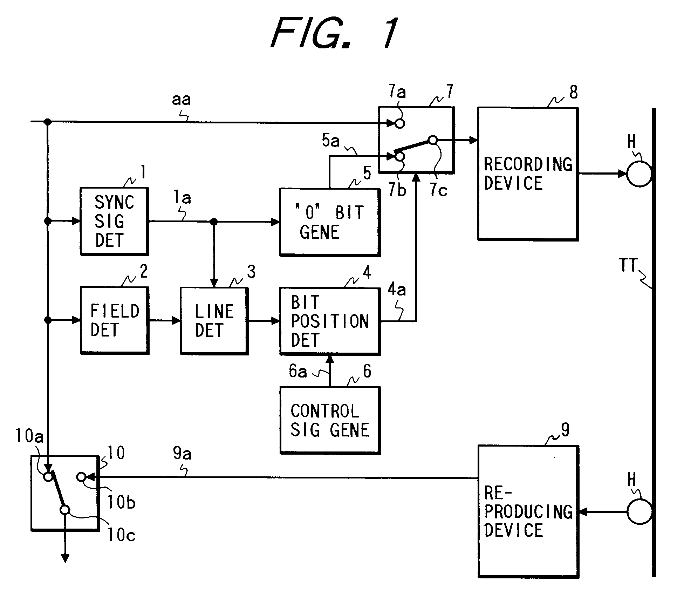

Fig. 1 shows a video signal recording and reproducing apparatus according to a first embodiment of this invention. In the first embodiment, detection is made as to a video signal component unsuited for the transmission by the apparatus. When such a video signal component is detected, information represented by an identification signal in the video signal is changed to a state indicating the absence of the video signal component. Then, the video signal is recorded into a recording medium.

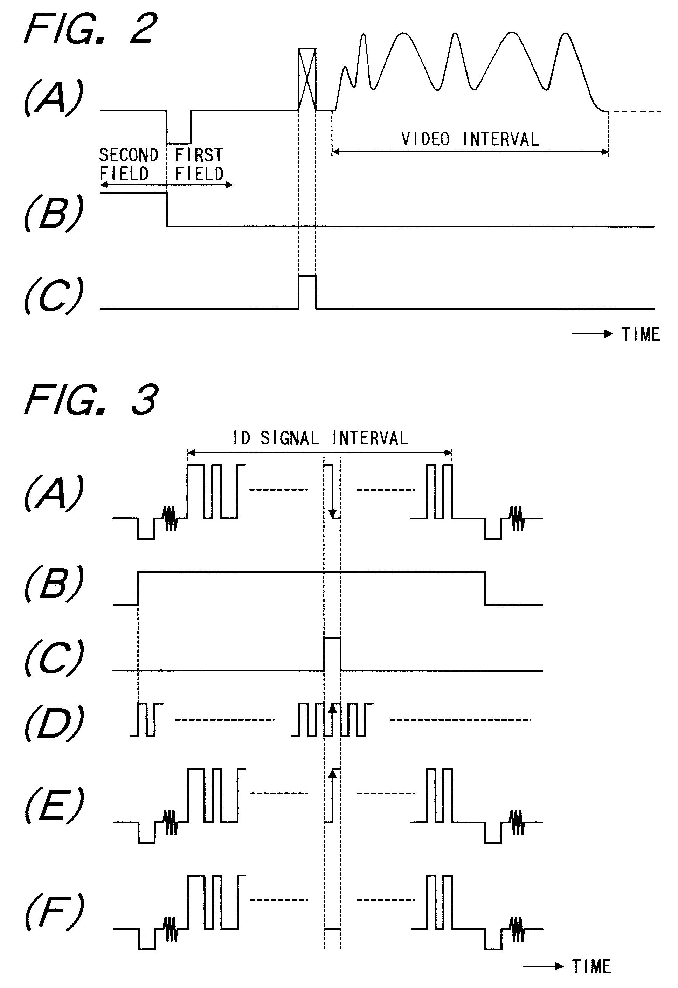

As shown in Fig. 1, the recording and reproducing apparatus includes a sync signal detector 1 and a field detector 2 to which a PALplus signal "aa" is fed via a transmission line. The PALplus signal "aa" has a waveform such as shown in the part (A) of Fig. 2.

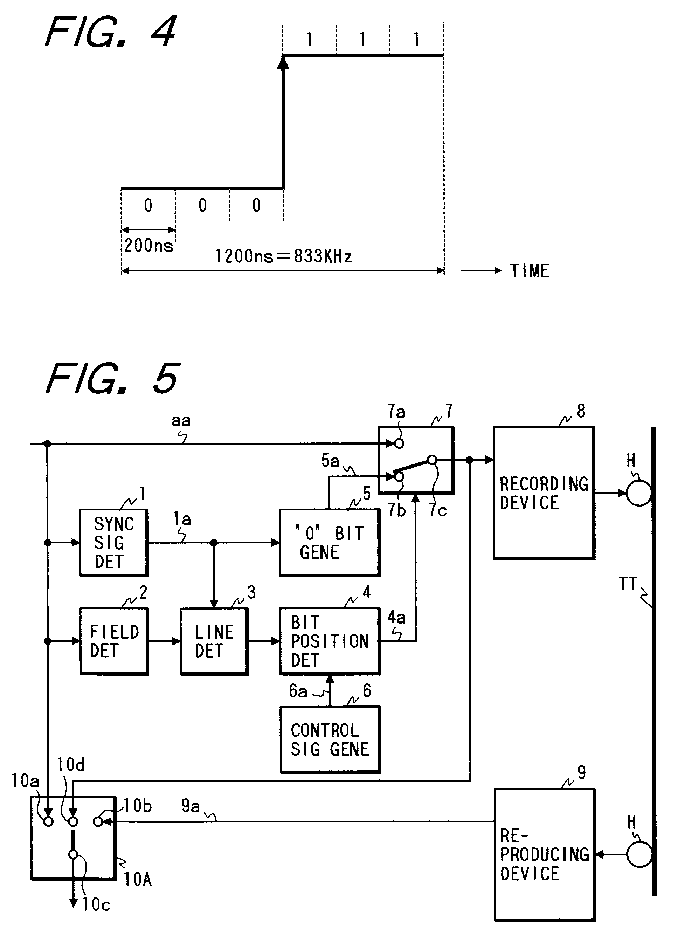

A time segment of the PALplus signal "aa" which corresponds to the 23-rd line of a first field contains an identification signal having a sequence of plural bits, for example, 14 bits. Each bit of the identification signal has a period of 1,200 nsec which corresponds to a frequency of 833 KHz. As shown in Fig. 4, six successive 200-nsec clock periods compose a 1-bit period of the information signal. In the case where a bit of the identification signal represents a logic state of "0", a signal level changes from a low level to a high level during a related 1-bit period. In the case where a bit of the identification signal represents a logic state of "1", a signal level changes from a high level to a low level during a related 1-bit period.

A given bit of the identification signal represents the presence and absence of a specific video signal component (a specific PALplus signal component) unsuited for the recording and the reproduction by the video signal recording and reproducing apparatus. Specifically, the identification signal bit being "0" represents the absence of the specific video signal component. The identification signal bit being "1" represents the presence of the specific video signal component.

The sync signal detector 1 detects a horizontal sync signal 1a in the PALplus signal "aa", and outputs the detected horizontal sync signal 1a to a line detector 3 and a "0" bit generator 5.

The field detector 2 decides whether the current PALplus signal "aa" corresponds to a first field or a second field (or detects whether or not the current PALplus signal "aa" corresponds to a first field). The field detector 2 feeds the line detector 3 with a field detection signal representing whether or not the current PALplus signal "aa" corresponds to a first field. The field detection signal outputted from the field detector 2 has a waveform such as shown in the part (B) of Fig. 2. Specifically, the field detection signal remains at a low level during a first field, and remains at a high level during a second field.

The line detector 3 counts pulses of the horizontal sync signal 1a. The pulse counting by the line detector 3 is started at the commencement of every first field in response to the field detection signal fed from the field detector 2. The line detector 3 decides whether or not the number of the counted pulses reaches a given number to detect whether or not the current PALplus signal "aa" corresponds to a given line (the 23-rd line) containing an identification signal. After the number of the counted pulses reaches the given number, the pulse count number is reset or initialized. The line detector 3 outputs a signal which has a high level during a 1-line period corresponding to the given line (the 23-rd line) containing the information signal. During other periods, the output signal of the line detector 3 remains at a low level. The output signal of the line detector 3 has a waveform such as shown in the part (B) of Fig. 3. The output signal of the line detector 3 is fed to a bit position detector 4.

The line detector 3 includes, for example, a counter starting in response to the field detection signal and counting pulses of the horizontal sync signal 1a. In this case, the counter is designed to output a high-level signal when the number of the counted pulses reaches the given number. In addition, the counter is designed so that the pulse count number is reset or initialized after the number of the counted pulses reaches the given number.

The bit position detector 4 will now be described with reference to Fig. 3. The identification signal has a waveform such as shown in the part (A) of Fig. 3. The output signal of the line detector 3 has a waveform such as shown in the part (B) of Fig. 3. The output signal of the line detector 3 remains at the high level during a period containing the interval for which the identification signal occurs.

The bit position detector 4 responds to a clock signal synchronized with the identification signal and having a period corresponding to the 1-bit period of the identification signal. The clock signal has a waveform such as shown in the part (D) of Fig. 3. The clock signal is generated by a suitable device (not shown). The bit position detector 4 counts pulses of the clock signal. The pulse counting by the bit position detector 4 is started by a rising edge in the output signal of the line detector 3. The bit position detector 4 receives a control signal 6a from a control signal generator 6 which represents a given number. The bit position detector 4 decides whether or not the number of the counted pulses reaches the given number represented by the control signal 6a, and generates a bit position detection signal 4a in response to a result of the decision. After the number of the counted pulses reaches the given number, the pulse count number is reset or initialized.

The bit position detection signal 4a has a waveform such as shown in the part (C) of Fig. 3. The bit position detection signal 4a has a high level during a 1-bit period of the information signal which corresponds to an information signal segment to be changed or updated (rewritten). During other periods, the bit position detection signal 4a remains at a low level. In this way, the bit position detection signal 4a represents or designates a bit position where an information signal segment should be changed or updated (rewritten) .

The bit position detector 4 includes, for example, a counter being presettable in response to the control signal 6a. The counter starts in response to the output signal of the line detector 3 and counts pulses of the clock signal. In this case, the counter is designed to output a high-level signal when the number of the counted pulses reaches the given number represented by the control signal 6a. In addition, the counter is designed so that the pulse count number is reset or initialized after the number of the counted pulses reaches the given number.

The control signal 6a generated by the control signal generator 6 designates a bit of the information signal (that is, an information signal segment) which indicates the presence and absence of a specific video signal component generally unsuited for the recording and the reproduction in view of various characteristics (such as a frequency characteristic, a jitter characteristic, and a transmission band characteristic) of the video signal recording and reproducing apparatus.

In the case of some types of recording media and some types of recording/reproducing methods, the specific video signal component related to the bit of the information signal (the information signal segment) is fit for the recording and the reproduction. In this case, the control signal generator 6 disables the control signal 6a. Specifically, a casing of a recording medium is provided with a type-identifying mark or a discrimination hole, and a section of the video signal recording and reproducing apparatus detects the presence and absence of such a mark or hole. The control signal generator 6 enables and disables the control signal 6a in response to a signal representing the result of the detection related to the presence and absence of the mark or hole.

In the case where various characteristics of the video signal recording and reproducing apparatus are unchanged, that is, in the case where the video signal recording and reproducing apparatus is adapted to only one type of recording media and one type of a recording/reproducing method, the control signal generator 6 produces a predetermined signal as the control signal 6a.

With reference back to Fig. 1, the "0" bit generator 5 responds to the horizontal sync signal la and also the clock signal synchronized with the identification signal, and produces and outputs a 1-bit signal in a logic state of "0" for every 1-bit period of the identification signal. The output signal 5a of the "0" bit generator 5 has a waveform similar to, for example, the waveform shown in the part (D) of Fig. 3. It should be noted that in the case where a bit of the identification signal represents a logic state of "0", a signal level changes from a low level to a high level during a related 1-bit period.

A first selector 7 has two fixed contacts 7a and 7b and one movable contact 7c. The first selector 7 also has a control terminal. The movable contact 7c of the first selector 7 connects with either the fixed contact 7a or the fixed contact 7b in response to a signal applied to the control terminal thereof. The fixed contact 7a of the first selector 7 receives the PALplus signal "aa". The fixed contact 7b of the first selector 7 receives the output signal 5a of the "0" bit generator 5. The control terminal of the first selector 7 receives the bit position detection signal 4a from the bit position detector 4. The movable contact 7c of the first selector 7 leads to a recording device 8. The first selector 7 selects one of the PALplus signal "aa" and the output signal 5a of the "0" bit generator 5 in response to the bit position detection signal 4a, and transmits the selected signal to the recording device 8. Specifically, the first selector 7 selects the output signal 5a of the "0" bit generator 5 when the bit position detection signal 4a assumes the high level. The first selector 7 selects the PALplus signal "aa" when the bit position detection signal 4a is in the low level state.

As a result of the operation of the first selector 7, the information signal segment in the bit position designated by the bit position detection signal 4a is changed or updated to a logic state of "0" while the PALplus signal "aa" travels to the recording device 8 via the first selector 7. The information signal segment with a logic state of "0" represents the absence of the related specific video signal component. The signal outputted from the first selector 7 to the recording device 8 has a waveform such as shown in the part (E) of Fig. 3.

The recording device 8 subjects the output signal of the first selector 7 to known recording processes such as an emphasis process and a frequency modulation process, and outputs a resultant signal to a head H. During a recording mode of operation of the video signal recording and reproducing apparatus, the head H records the output signal of the recording device 8 on a recording medium TT. The recording medium TT includes, for example, a magnetic tape, a magnetic disk, an optical disk, or a semiconductor memory.

During a reproducing mode of operation of the video signal recording and reproducing apparatus, the head H reproduces a signal from the recording medium TT and outputs the reproduced signal to a reproducing device 9. The reproducing device 9 has a complementary relation with the recording device 8, and subjects the output signal of the head H to known reproducing processes such as a frequency demodulation process and a de-emphasis process. Thus, the reproducing device 9 converts the output signal of the head H into a reproduced video signal 9a.

A second selector 10 has two fixed contacts 10a and 10b and one movable contact 10c. The second selector 10 also has a control terminal. The movable contact 10c of the second selector 10 connects with either the fixed contact 10a or the fixed contact 10b in response to a signal applied to the control terminal thereof. The fixed contact 10a of the second selector 10 receives the PALplus signal "aa". The fixed contact 10b of the second selector 10 receives the reproduced video signal 9a from the reproducing device 9. The control terminal of the second selector 10 receives an apparatus condition signal from a suitable device (not shown) which represents whether the video signal recording and reproducing apparatus is active or inactive and also whether the video signal recording and reproducing apparatus is in the recording operation mode or the reproducing operation mode. The movable contact 10c of the second selector 10 leads to a television receiver (not shown). The second selector 10 selects one of the PALplus signal "aa" and the reproduced video signal 9a in response to the apparatus condition signal, and transmits the selected signal to the television receiver. Specifically, the second selector 10 selects the PALplus signal "aa" when the video signal recording and reproducing apparatus is inactive or active in the recording operation mode. The second selector 10 selects the reproduced video signal 9a when the video signal recording and reproducing apparatus is active in the reproducing operation mode.

As understood from the previous description, the PALplus signal (the video signal) "aa" contains the information signal bit related to the specific video signal component unsuited for the recording and the reproduction by the video signal recording and reproducing apparatus. The information signal bit related to the specific video signal component is changed to the state indicating the absence of the specific video signal component before the PALplus signal (the video signal) "aa" is recorded into the recording medium TT. Accordingly, in the video signal recorded into and reproduced from the recording medium TT, the information signal bit is in the state representing the absence of the related specific video signal component. When the video signal reproduced from the recording medium TT is visualized by the television receiver, the information signal bit representing the absence of the specific video signal component prevents the television receiver from executing extended definition processing on the video signal and causes the television receiver to disregard the specific video signal component. Therefore, the specific video signal component can be prevented from interfering with images on a display of the television receiver.

### Second Embodiment

Fig. 5 shows a second embodiment of this invention which is similar to the embodiment of Fig. 1 except for design changes indicated hereinafter. A video signal recording and reproducing apparatus according to the embodiment of Fig. 5 includes a second selector 10A instead of the second selector 10 in Fig. 1.

As shown in Fig. 5, the second selector 10A has one movable contact 10c and three fixed contacts 10a, 10b, and 10d. The second selector 10A also has a control terminal. The movable contact 10c of the second selector 10A connects with one of the fixed contacts 10a, 10b, and 10d in response to a signal applied to the control terminal thereof. The fixed contact 10a of the second selector 10A receives a PALplus signal "aa". The fixed contact 10b of the second selector 10A receives a reproduced video signal 9a from a reproducing device 9. The fixed contact 10d of the second selector 10A receives an output signal of a first selector 7. The control terminal of the second selector 10A receives an apparatus condition signal from a suitable device (not shown) which represents whether the video signal recording and reproducing apparatus is inactive or active and also whether the video signal recording and reproducing apparatus is in the recording operation mode or the reproducing operation mode. The movable contact 10c of the second selector 10A leads to a television receiver (not shown). The second selector 10A selects one of the PALplus signal "aa", the reproduced video signal 9a, and the output signal of the first selector 7 in response to the apparatus condition signal, and transmits the selected signal to the television receiver.

Specifically, the second selector 10A selects the PALplus signal "aa" when the video signal recording and reproducing apparatus is active in the recording operation mode. The second selector 10A selects the reproduced video signal 9a when the video signal recording and reproducing apparatus is active in the reproducing operation mode. The second selector 10A selects the output signal of the first selector 7 when the video signal recording and reproducing apparatus is inactive (E-E mode).

In a modification of the embodiment of Fig. 5, the second selector 10A selects the output signal of the second selector 7 when the video signal recording and reproducing apparatus is active in the recording operation mode. The second selector 10A selects the reproduced video signal 9a when the video signal recording and reproducing apparatus is active in the reproducing operation mode. The second selector 10A selects the PALplus signal "aa" when the video signal recording and reproducing apparatus is inactive.

### Third Embodiment

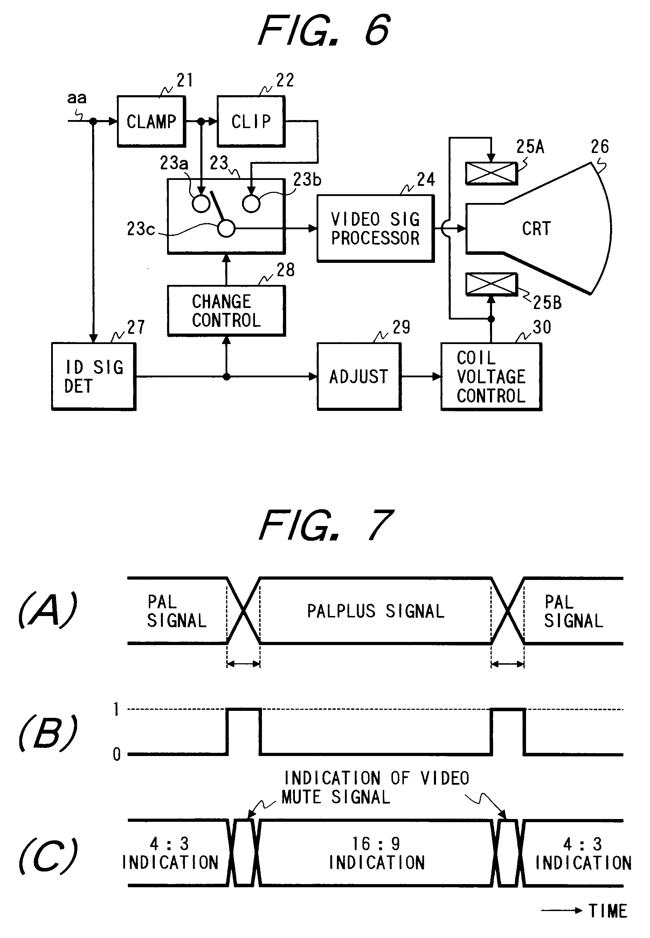

Fig. 6 shows a video signal indicating apparatus or a television receiver according to a third embodiment of this invention. As shown in Fig. 6, the video signal indicating apparatus includes a clamping circuit 21 and an identification signal detector 27 to which an input video signal "aa" is fed.

The clamping circuit 21 holds the direct-current component of the input video signal "aa" at a predetermined level, and outputs a resultant video signal to a clipping circuit (a mute signal generator) 22 and a switch 23. The clipping circuit 22 cuts off the luminance signal component from the video signal outputted by the clamping circuit 21, and thereby converts the video signal into a video mute signal. The clipping circuit 22 outputs the video mute signal to the switch 23.

The switch 23 has two fixed contacts 23a and 23b and one movable contact 23c. The switch 23 also has a control terminal. The movable contact 23c of the switch 23 connects with either the fixed contact 23a or the fixed contact 23b in response to a signal applied to the control terminal thereof. The fixed contact 23a of the switch 23 receives the output video signal of the clamping circuit 21. The fixed contact 23b of the switch 23 receives the video mute signal from the clipping circuit 22. The control terminal of the switch 23 receives a switch control signal from a switch controller 28. The movable contact 23c of the switch 23 leads to a video signal processing circuit 24. The switch 23 selects one of the output video signal of the clamping circuit 21 and the video mute signal in response to the switch control signal, and transmits the selected signal to the video signal processing circuit 24.

The video signal processing circuit 24 receives the video signal from the switch 23, and subjects the received video signal to given signal processing. The video signal processing circuit 24 outputs a processing-resultant signal to a CRT (a cathode ray tube) 26. Every picture represented by the processing-resultant signal is visualized on a screen of the CRT 26.

The identification signal detector 27 serves to detect an identification signal in the input video signal "aa". The identification signal is placed in a time segment of the input video signal "aa" which corresponds to a given line of every given field represented by the input video signal "aa". The identification signal detector 27 generates a detection signal in response to the detected identification signal, and outputs the generated detection signal to the switch controller 28 and an adjuster 29. The switch controller 28 generates the switch control signal in response to the output signal of the identification signal detector 27. Accordingly, the signal selection by the switch 23 depends on the state of the identification signal.

The adjuster 29 generates a frame-size adjustment signal in response to the output signal of the identification signal detector 27. The adjuster 29 outputs the frame-size adjustment signal to a coil voltage controller 30. A voltage applied to deflection coils 25A and 25B of the CRT 26 is referred to as a coil voltage. The coil voltage controller 30 controls the coil voltage in response to the frame-size adjustment signal. The coil voltage determines the size and the aspect ratio of an effective frame of every picture on the screen of the CRT 26. Accordingly, the frame size on the CRT 26 and also the aspect ratio of the effective frame on the CRT 26 are controlled in response to the identification signal.

The input video signal "aa" is changed between a PALplus signal and a PAL signal of the current format. The PAL signal of the current format is referred to as the normal PAL signal. The PALplus signal is fed from a suitable apparatus such as a television signal receiving apparatus or a video signal recording and reproducing apparatus. The normal PAL signal is fed from a suitable apparatus such as a television signal receiving apparatus.

The video signal indicating apparatus of Fig. 6 operates as follows. The input video signal "aa" is fed to the clamping circuit 21 and the identification signal detector 27. The clamping circuit 21 holds the direct-current component of the input video signal "aa" at the predetermined level, and outputs the resultant video signal to the clipping circuit 22 and the switch 23. The clipping circuit 22 cuts off the luminance signal component from the video signal outputted by the clamping circuit 21, and thereby converts the video signal into the video mute signal representing a black picture. The clipping circuit 22 outputs the video mute signal to the switch 23. Since the video mute signal has good sync components, synchronization remains maintained when the video mute signal is visualized by the CRT 26.

The identification signal detector 27 detects the identification signal in the input video signal "aa", and generates the detection signal in response to the detected identification signal. The detection signal changes from a logic state of "0" to a logic state of "1" when the identification signal moves from a normal-PAL denoting state to a PALplus denoting state, that is, when the input video signal "aa" changes from the normal PAL signal to the PALplus signal. The detection signal changes from "1" to "0" when the identification signal moves from the PALplus denoting state to the normal-PAL denoting state, that is, when the input video signal "aa" changes from the PALplus signal to the normal PAL signal. The identification signal detector 27 outputs the detection signal to the switch controller 28 and the adjuster 29.

The switch controller 28 generates the switch control signal in response to the output signal of the identification signal detector 27. The switch control signal responds to changes in the state of the output signal of the identification signal detector 27. When the input video signal "aa" changes from the normal PAL signal to the PALplus signal as shown in the part (A) of Fig. 7, the state of the output signal of the identification signal detector 27 changes so that the switch control signal moves from a logic state of "0" to a logic state of "1" as shown in the part (B) of Fig. 7. The switch control signal remains "1" during a predetermined interval. At the end of the predetermined interval, the switch control signal returns from "1" to "0". When the input video signal "aa" changes from the PALplus signal to the normal PAL signal as shown in the part (A) of Fig. 7, the state of the output signal of the identification signal detector 27 changes so that the switch control signal moves from "0" to "1" as shown in the part (B) of Fig. 7. The switch control signal remains "1" during the predetermined interval. At the end of the predetermined interval, the switch control signal returns from "1" to "0". The switch controller 28 outputs the switch control signal to the switch 23. The switch controller 28 includes, for example, a monostable multivibrator responsive to both a rising edge and a falling edge in the output signal of the identification signal detector 27.

The switch 23 selects one of the output video signal of the clamping circuit 21 and the video mute signal in response to the switch control signal, and transmits the selected signal to the video signal processing circuit 24. Specifically, the switch 23 selects the output video signal of the clamping circuit 21 when the switch control signal is "0". The switch 23 selects the video mute signal when the switch control signal is "1". Accordingly, during the interval of every change of the input video signal "aa" between the PALplus signal and the normal PAL signal, the switch 23 selects the video mute signal and transmits the video mute signal to the video signal processing circuit 24. During other periods, the switch 23 selects the output video signal of the clamping circuit 21 and outputs the selected video signal to the video processing circuit 24.

The video signal processing circuit 24 receives the video signal from the switch 23, and subjects the received video signal to the given signal processing. The video signal processing circuit 24 outputs the processing-resultant signal to the CRT 26. Every picture represented by the processing-resultant signal is visualized on the screen of the CRT 26.

As previously described, during the interval of every change of the input video signal "aa" between the PALplus signal and the normal PAL signal, the switch 23 selects the video mute signal and transmits the video mute signal to the video signal processing circuit 24. Therefore, in such transitional conditions, the black picture represented by the video mute signal is visualized on the screen of the CRT 26 as shown in the part (C) of Fig. 7. Thus, in the transitional conditions, a disorder is prevented from appearing on the screen of the CRT 26. During other periods, that is, in untransitional conditions, the switch 23 selects the output signal of the clamping circuit 21 which corresponds to the PALplus signal or the normal PAL signal. The switch 23 transmits the selected signal to the video signal processing circuit 24. Therefore, in such untransitional conditions, pictures represented by the PALplus signal or the normal PAL signal are visualized on the screen of the CRT 26.

The adjuster 29 generates the frame-size adjustment signal in response to the output signal of the identification signal detector 27. The adjuster 29 outputs the frame-size adjustment signal to the coil voltage controller 30. The coil voltage controller 30 controls the coil voltage in response to the frame-size adjustment signal, that is, in response to the identification signal. The coil voltage is applied to the deflection coils 25A and 25B of the CRT 26. The coil voltage determines the size and the aspect ratio of the effective frame of every picture on the screen of the CRT 26. Accordingly, the frame size on the CRT 26 and also the aspect ratio of the effective frame on the CRT 26 are controlled in response to the identification signal. Specifically, when the identification signal represents that the input video signal "aa" agrees with the PALplus signal, the coil voltage controller 30 sets the coil voltage at a level providing a 16:9 aspect ratio (a 16:9 frame size) suited for the PALplus signal. Therefore, in this case, pictures represented by the PALplus signal are visualized on the screen of the CRT 26 with an aspect ratio of 16:9 as shown in the part (C) of Fig. 7. When the identification signal represents that the input video signal "aa" agrees with the normal PAL signal, the coil voltage controller 30 sets the coil voltage at a level providing a 4:3 aspect ratio (a 4:3 frame size) suited for the normal PAL signal. Therefore, in this case, pictures represented by the normal PAL signal are visualized on the screen of the CRT 26 with an aspect ratio of 4:3 as shown in the part (C) of Fig. 7.

The video signal indicating apparatus of Fig. 6 may be modified as follows. In a first modification of the video signal indicating apparatus, the switch 23 is omitted and the clipping circuit 22 is directly connected to the video signal processing circuit 24. Furthermore, the clipping circuit 22 is connected to the switch controller 28. In the first modification, the clipping circuit 22 is changed between an active state and a through state in response to the output signal of the switch controller 28. During the interval of every change of the input video signal "aa" between the PALplus signal and the normal PAL signal, the clipping circuit 22 changes from the through state to the active state in response to the output signal of the switch controller 28. Therefore, in such transitional conditions, the clipping circuit 22 outputs the video mute signal to the video signal processing circuit 24 so that the black picture represented by the video mute signal is visualized on the screen of the CRT 26. During other periods, that is, in untransitional conditions, the clipping circuit 22 is held in the through state by the output signal of the switch controller 28. Therefore, in such untransitional conditions, the output signal of the clamping circuit 21 which agrees with the PALplus signal or the normal PAL signal proceeds to the video signal processing circuit 24 without being processed by the clipping circuit 22 so that pictures represented by the PALplus signal or the normal PAL signal are visualized on the screen of the CRT 26.

In a second modification of the video signal indicating apparatus, the video mute signal generated by the clipping circuit 22 is replaced by a video signal representing a still picture, a set of characters, or a single-color picture such as a gray picture or a blue picture.

A third modification of the video signal indicating apparatus is provided with a receiving condition detector for sensing poor conditions of reception of an RF (radio frequency) television signal which is converted into the input video signal "aa". The switch 23 responds to an output signal of the receiving condition detector. When poor conditions of reception of the RF television signal are sensed by the receiving condition detector, the switch 23 selects the video mute signal outputted from the clipping circuit 22. Thus, in this case, the black picture represented by the video mute signal is visualized on the screen of the CRT 26. On the other hand, in the absence of poor conditions of reception of the RF television signal, the switch 23 selects the output signal of the clamping circuit 21 so that pictures represented by the PALplus signal or the normal PAL signal are visualized on the screen of the CRT 26.

### Fourth Embodiment

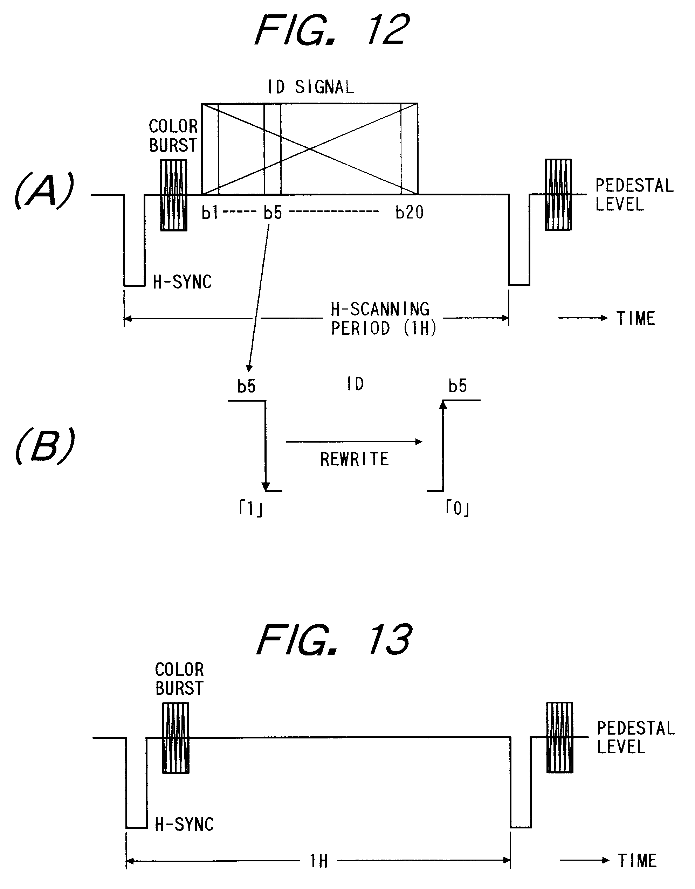

A fourth embodiment of this invention handles a Color plus signal which contains an identification signal as a PALplus signal does. Specifically, a time segment of the Color plus signal which corresponds to the 23-rd line of a first field contains an identification signal having a sequence of plural bits, for example, 20 bits b1, b2, b3, b4, b5, b6, b7, b8, b9, b10, b11, b12, b13, b14, b15, b16, b17, b18, b19, and b20. As shown in the part (A) of Fig. 12, the identification signal follows a horizontal sync signal and a color burst signal in a horizontal scanning period corresponding to the 23-rd line. Each bit of the identification signal has a period of 1,200 nsec which corresponds to a frequency of 833 KHz. Six successive 200-nsec clock periods compose a 1-bit period of the information signal. In the case where a bit of the identification signal represents a logic state of "0", a signal level changes from a low level to a high level during a related 1-bit period. In the case where a bit of the identification signal represents a logic state of "1", a signal level changes from a high level to a low level during a related 1-bit period.

The bit b5 of the identification signal represents whether or not a related video signal containing the identification signal agrees with a Color plus signal. Specifically, the bit b5 of the identification signal is in a logic state of "1" when the related video signal agrees with the Color plus signal. The bit b5 of the identification signal is in a logic state of "0" when the related video signal differs from the Color plus signal.

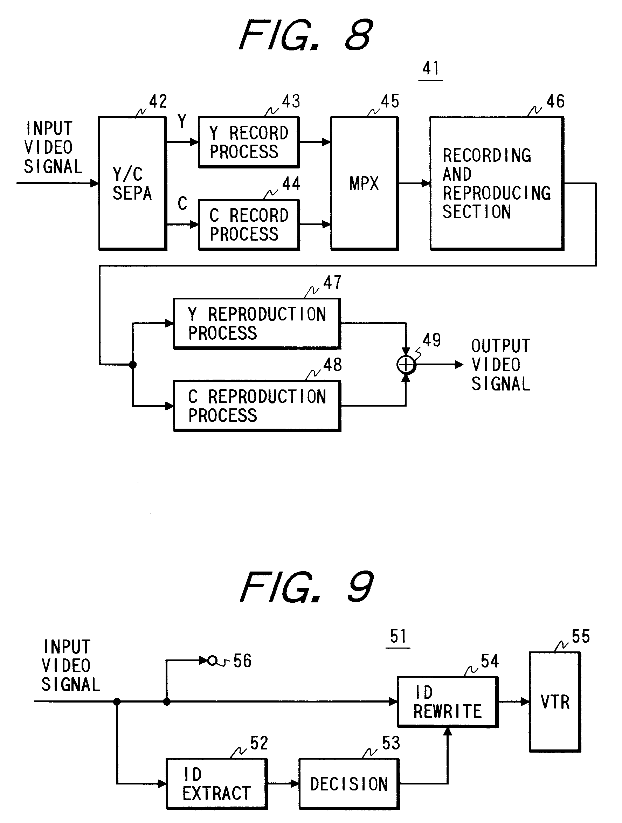

Fig. 8 shows a home-use video tape recorder (VTR) 41 for the current PAL system. As shown in Fig. 8, the VTR 41 includes a Y/C separation circuit 42 to which an input composite video signal is applied. The Y/C separation circuit 42 divides the input composite video signal into a Y signal and a C signal, that is, a luminance signal and a color signal. The Y/C separation circuit 42 outputs the luminance signal Y and the color signal C to a Y processor 43 and a C processor 44 respectively.

The Y processor 43 subjects the luminance signal Y to a frequency modulation process, converting the luminance signal Y into an FM (frequency modulation) luminance signal. The Y processor 43 outputs the FM luminance signal to a multiplexer 45. On the other hand, the C processor 44 subjects the color signal C to frequency-down conversion, making the color signal C into a down-converted color signal. The C processor 44 outputs the down-converted color signal to the multiplexer 45. The multiplexer 45 combines the FM luminance signal and the down-converted color signal into a multiplexed signal by a frequency multiplexing process. The multiplexer 45 outputs the multiplexed signal to a recording and reproducing section 46.

The recording and reproducing section 46 includes a head and a magnetic tape. During a recording mode of operation of the VTR, the head records the multiplexed signal on the magnetic tape. During a reproducing mode of operation of the VTR, the head reproduces a multiplexed signal from the magnetic tape. The recording and reproducing section 46 outputs the reproduced multiplexed signal to a Y processor 47 and a C processor 48.

The Y processor 47 separates an FM luminance signal from the reproduced multiplexed signal. The Y processor 47 subjects the FM luminance signal to an frequency demodulation process, recovering the original luminance signal Y from the FM luminance signal. The Y processor 47 outputs the recovered luminance signal Y to a combining circuit 49. On the other hand, the C processor 48 separates a down-converted color signal from the reproduced multiplexed signal. The C processor 48 subjects the down-converted color signal to frequency-up conversion, recovering the original color signal C from the down-converted color signal. The C processor 48 outputs the recovered color signal C to the combining circuit 49. The combining circuit 49 combines the luminance signal Y and the color signal C into a composite video signal which is outputted from the VTR. Thus, the output video signal of the VTR is the composite video signal generated by the combining circuit 49.

Fig. 9 shows a video signal transmission system 51 according to the fourth embodiment of this invention. The video signal transmission system 51 is designed to provide the following process. In the case where a composite video signal of the Color plus system is recorded by a home-use VTR for the PAL system, the bit b5 of the identification signal in the Color plus signal is changed from a logic state of "1" to a logic state of "0" before the recording of the Color plus signal.

As shown in Fig. 9, the video signal transmission circuit 51 includes an identification signal extracting circuit 52 and an identification signal rewriting circuit 54 to which an input video signal is fed. The identification signal extracting circuit 52 extracts an identification signal from a time segment of the input video signal which corresponds to the 23-rd line of every given field. The identification signal extracting circuit 52 outputs the extracted identification signal to a decision circuit 53.

The decision circuit 53 determines whether the bit b5 of the identification signal is "1" or "0", that is, whether or not the input video signal agrees with a Color plus composite video signal. The decision circuit 53 generates a control signal in response to the state of the bit b5 of the identification signal, and outputs the control signal to the identification signal rewriting circuit 54. The decision circuit 53 includes, for example, a comparator which compares the bit b5 of the identification signal with a preset signal of "1".

The identification signal rewriting circuit 54 changes between an active state and a through state in response to the control signal fed from the decision circuit 53. When the decision circuit 53 finds the bit b5 of the identification signal to be "1", that is, when the decision circuit 53 finds the input video signal to be a Color plus composite video signal, the identification signal rewriting circuit 54 is activated by the output signal of the decision circuit 53 so that the identification signal rewriting circuit 54 changes the bit b5 of the identification signal from "1" to "0" as shown in the part (B) of Fig. 12. Thus, in this case, the identification signal rewriting circuit 54 changes the input video signal into a modified Color plus composite video signal in which the bit b5 of an information signal is "0". The identification signal rewriting circuit 54 outputs the modified Color plus composite video signal to a home-use VTR 55 for the PAL system. When the decision circuit 53 finds the bit b5 of the identification signal to be "0", that is, when the decision circuit 53 finds the input video signal to be different from a Color plus composite video signal, the identification signal rewriting circuit 54 is set in the through state by the output signal of the decision circuit 53 so that the input video signal proceeds to the VTR 55 without being processed by the identification signal rewriting circuit 54.

The VTR 55 records the output video signal of the identification signal rewriting circuit 54 on a recording medium. The VTR 55 may be the VTR 41 of Fig. 8.

The video signal transmission system 51 includes a bypass output terminal 56 to which the input video signal is applied.

As understood from the previous description, in the case where a Color plus composite video signal is recorded by the home-use VTR 55 for the PAL system, the video signal transmission system 51 changes the bit b5 of an identification signal in the Color plus composite video signal from "1" to "0" before the recording thereof.

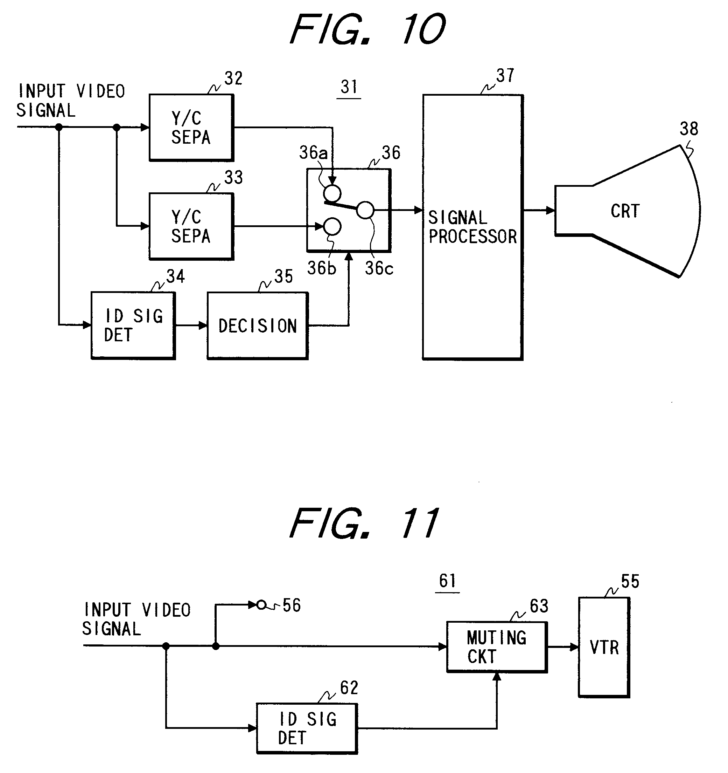

Fig. 10 shows a television receiver 31 which can handle both a normal PAL signal and a Color plus signal. As shown in Fig. 10, the television receiver 31 includes Y/C separation circuits 32 and 33 to which an input composite video signal is fed.

The Y/C separation circuit 32 is designed to execute a decoding process and a Y/C separation process for a Color plus composite video signal. The Y/C separation circuit 32 includes a three-dimensional comb filter. In the case where the input composite video signal agrees with the Color plus composite video signal, the Y/C separation circuit 32 divides the input composite video signal into a luminance signal Y and color signals U and V.

The Y/C separation circuit 33 is designed to execute a Y/C separation process and a color demodulating process for a PAL composite video signal. The Y/C separation circuit 33 separates color components from the PAL composite video signal. The Y/C separation circuit 33 includes a color demodulation circuit which demodulates the color components into color signals U and V. In the case where the input composite video signal agrees with the PAL composite video signal, the Y/C separation circuit 33 divides the input composite video signal into a luminance signal Y and color signals U and V.

A switch 36 includes two fixed contacts 36a and 36b and one movable contact 36c. The switch 36 includes a control terminal. The movable contact 36c connects with either the fixed contact 36a or the fixed contact 36b in response to a signal applied to the control terminal. The fixed contact 36a receives the luminance signal Y and the color signals U and V from the Y/C separation circuit 32. The fixed contact 36b receives the luminance signal Y and the color signals U and V from the Y/C separation circuit 33. The movable contact 36c leads to a signal processor 37. The switch 36 selects one of a set of the output signals of the Y/C separation circuit 32 and a set of the output signals of the Y/C separation circuit 33 in response to a signal on the control terminal thereof, and transmits the selected signal set to the signal processor 37.

The signal processor 37 converts the set of the received signals into primary color signals R, G, and B, and informs a CRT 38 of the primary color signals R, G, and B. As a result, every picture represented by the input composite video signal is visualized on the screen of the CRT 38.

The television receiver 31 includes an identification signal detector 34 to which the input composite video signal is applied. The identification signal detector 34 extracts an identification signal from a time segment of the input composite video signal which corresponds to the 23-rd line of every given field. The identification signal detector 34 outputs the extracted identification signal to a decision circuit 35.

The decision circuit 35 determines whether the bit b5 of the identification signal is "1" or "0", that is, whether or not the input composite video signal agrees with a Color plus composite video signal. The decision circuit 35 generates a switch control signal in response to the state of the bit b5 of the identification signal, and outputs the switch control signal to the control terminal of the switch 36. The decision circuit 35 includes, for example, a comparator which compares the bit b5 of the identification signal with a preset signal of "1".

When the decision circuit 35 finds the bit b5 of the identification signal to be "1", that is, when the decision circuit 35 finds the input composite video signal to be a Color plus composite video signal, the switch 36 selects the set of the output signals of the Y/C separation circuit 32 in response to the switch control signal. Thus, in this case, the set of the output signals of the Y/C separation circuit 32 which corresponds to the Color plus composite video signal is visualized by the CRT 38. When the decision circuit 35 finds the bit b5 of the identification signal to be "0", that is, when the decision circuit 35 finds the input composite video signal to be different from a Color plus composite video signal, the switch 36 selects the set of the output signals of the Y/C separation circuit 33 in response to the switch control signal. Thus, in this case, the set of the output signals of the Y/C separation circuit 33 which does not correspond to the Color plus composite video signal is visualized by the CRT 38.

In the case where the input composite video signal does not have an identification signal or the input composite video signal has a mute identification signal held at a pedestal level (a black level), the switch 36 is controlled by the combination of the identification signal detector 34 and the decision circuit 35 to select the set of the output signals of the Y/C separation circuit 33.

It is now assumed that a Color plus composite video signal is recorded by the VTR 55 in Fig. 9, and then the Color plus composite video signal is reproduced by the VTR 55 and is fed to the television receiver 31 of Fig. 10. As understood from the previous description, in the reproduced Color plus composite video signal, the bit b5 of the identification signal is "0". Thus, in this case, the switch 36 selects the set of the output signals of the Y/C separation circuit 33 in response to the switch control signal from the decision circuit 35, and the set of the output signals of the Y/C separation circuit 33 which corresponds to the reproduced Color plus composite video signal is visualized by the CRT 38. Since the Y/C separation circuit 33 is adapted to the PAL system, a reproduced picture on the screen of the CRT 38 is similar in quality to a reproduced image of the PAL system.

It should be noted that signal processing by a home-use VTR for the PAL system deteriorates a Color plus signal in respect of a Y/C separation characteristic, and a Y/C separation circuit for the Color plus system tends to execute inaccurate Y/C separation on a Color plus signal fed from the home-use VTR for the PAL system. If output signals of the Y/C separation circuit for the Color plus system are fed to a display, the inaccurate Y/C separation lowers the quality of a reproduced image on the display. This embodiment prevents such a problem since the Y/C separation circuit 33 for the PAL system is selected and used when a video signal reproduced from the VTR 55 is fed to the television receiver 31.

### Fifth Embodiment

A fifth embodiment of this invention is similar to the fourth embodiment except for design changes indicated hereinafter. Fig. 11 shows a video signal transmission system 61 according to the fifth embodiment. The video signal transmission system 61 is designed to provide the following process. In the case where a composite video signal of the Color plus system is recorded by a home-use VTR for the PAL system, the identification signal in the Color plus signal is muted to a pedestal level (a black level) before the recording of the Color plus signal. The Color plus signal containing a mute identification signal held at the pedestal level has a waveform such as shown in Fig. 13.

As shown in Fig. 11, the video signal transmission circuit 61 includes an identification signal detector 62 and a muting circuit 63 to which an input video signal is fed. The input video signal agrees with a Color plus signal or a normal PAL signal. The identification signal detector 62 serves to detect an identification signal from a time segment of the input video signal which corresponds to the 23-rd line of every given field. The identification signal detector 62 generates a control signal in response to the detected identification signal. The control signal indicates the interval during which the identification signal occurs. The identification signal detector 62 outputs the control signal to the muting circuit 63.

The muting circuit 63 changes between an active state and a through state in response to the control signal fed from the identification signal detector 62. It is now assumed that the input video signal agrees with a Color plus signal and therefore the identification signal detector 62 detects an identification signal therein. During the interval of the occurrence of the identification signal, the muting circuit 63 is activated by the control signal from the identification signal detector 62 so that the muting circuit 63 mutes the input video signal (the Color plus signal) to the pedestal level. The muting circuit 63 outputs a resultant mute signal to a VTR 55. During other periods which contain intervals of the occurrence of a horizontal sync signal and a color burst signal in the 23-rd line of every given field, the muting circuit 63 is set to the through state by the control signal from the identification signal detector 62 so that the input video signal (the Color plus signal) proceeds to the VTR 55 without being processed by the muting circuit 63. In this way, the input video signal (the Color plus signal) is converted into a modified Color plus signal from which the identification signal is deleted. The muting circuit 63 outputs the modified Color plus signal to the VTR 55.

It is now assumed that a Color plus composite video signal is recorded by the VTR 55 in Fig. 11, and then the Color plus composite video signal is reproduced by the VTR 55 and is fed to the television receiver 31 of Fig. 10. As understood from the previous description, the reproduced Color plus composite video signal does not have an identification signal. Thus, in this case, the switch 36 in the television receiver 31 selects the set of the output signals of the Y/C separation circuit 33 in response to the switch control signal from the decision circuit 35, and the set of the output signals of the Y/C separation circuit 33 which corresponds to the reproduced Color plus composite video signal is visualized by the CRT 38. Since the Y/C separation circuit 33 is adapted to the PAL system, a reproduced picture on the screen of the CRT 38 is similar in quality to a reproduced image of the PAL system.

### Sixth Embodiment

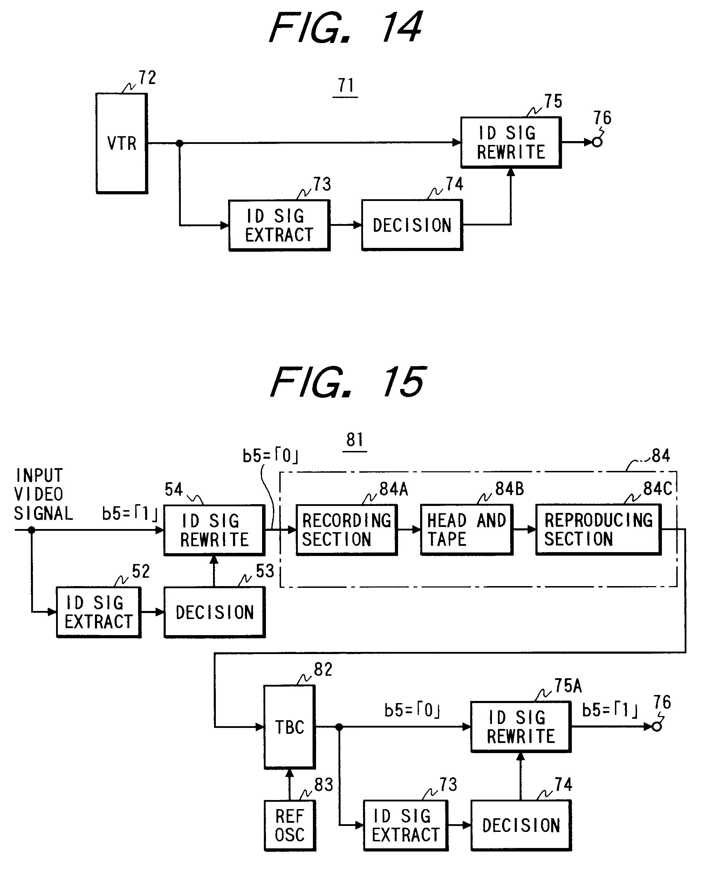

A sixth embodiment of this invention is similar to the fourth embodiment except for design changes indicated hereinafter. Fig. 14 shows a video signal transmission system 71 according to the sixth embodiment. The video signal transmission system 71 is designed to provide the following process. In the case where a Color plus composite video signal reproduced from a home-use VTR for the PAL system is transmitted to an external apparatus, the bit b5 of an identification signal in the Color plus composite video signal is rewritten from "1" to "0" (see the part (B) of Fig. 12) before the transmission to the external apparatus.

With reference to Fig. 14, the video signal transmission system 71 includes an identification signal extracting circuit 73 and an identification signal rewriting circuit 75 which receive a composite video signal reproduced by a home-use VTR 72 for the PAL system. The VTR 72 may be the VTR 41 of Fig. 8.

The identification signal extracting circuit 73 extracts an identification signal from a time segment of the received video signal which corresponds to the 23-rd line of every given field. The identification signal extracting circuit 73 outputs the extracted identification signal to a decision circuit 74.

The decision circuit 74 determines whether the bit b5 of the identification signal is "1" or "0", that is, whether or not the received video signal agrees with a Color plus composite video signal. The decision circuit 74 generates a control signal in response to the state of the bit b5 of the identification signal, and outputs the control signal to the identification signal rewriting circuit 75. The decision circuit 74 includes, for example, a comparator which compares the bit b5 of the identification signal with a preset signal of "1".

The identification signal rewriting circuit 75 changes between an active state and a through state in response to the control signal fed from the decision circuit 74. When the decision circuit 74 finds the bit b5 of the identification signal to be "1", that is, when the decision circuit 74 finds the received video signal to be a Color plus composite video signal, the identification signal rewriting circuit 75 is activated by the output signal of the decision circuit 74 so that the identification signal rewriting circuit 75 changes the bit b5 of the identification signal from "1" to "0" as shown in the part (B) of Fig. 12. Thus, in this case, the identification signal rewriting circuit 75 changes the received video signal into a modified Color plus composite video signal in which the bit b5 of an information signal is "0". The identification signal rewriting circuit 75 outputs the modified Color plus composite video signal to an external apparatus (not shown) via an output terminal 76. When the decision circuit 74 finds the bit b5 of the identification signal to be "0", that is, when the decision circuit 74 finds the received video signal to be different from a Color plus composite video signal, the identification signal rewriting circuit 75 is set in the through state by the output signal of the decision circuit 74 so that the received video signal proceeds to the external apparatus via the output terminal 76 without being processed by the identification signal rewriting circuit 74.

It should be noted that the identification signal rewriting circuit 74 may be replaced by a muting circuit as in the embodiment of Fig. 11.

### Seventh Embodiment

A seventh embodiment of this invention is similar to the fourth embodiment except for design changes indicated hereinafter. Fig. 15 shows a video signal transmission system 81 according to the seventh embodiment. A Color plus composite video signal reproduced from a home-use VTR for the PAL system tends to have a significant amount of jitter components corresponding to signal variations along a time base. The seventh embodiment is designed to remove the jitter components from the Color plus composite video signal.

As shown in Fig. 15, the video signal transmission system 81 includes an identification signal extracting circuit 52, a decision circuit 53, and an identification signal rewriting circuit 54 which are similar to those of Fig. 9. The identification signal extracting circuit 52, the decision circuit 53, and the identification signal rewriting circuit 54 are connected in a manner similar to the connection manner in Fig. 9.

When an input video signal fed to the identification signal extracting circuit 52 and the identification signal rewriting circuit 54 agrees with a Color plus signal containing an information signal with a bit b5 being "1", the identification signal rewriting circuit 54 is controlled by the combination of the identification signal extracting circuit 52 and the decision circuit 53 to change the bit b5 of the identification signal to "0".

A home-use VTR 84 for the PAL system follows the identification signal rewriting circuit 54. The VTR 84 may be the VTR 41 of Fig. 8. The VTR 84 includes a sequential combination of a recording section 84A, a tape and head section 84B, and a reproducing section 84C. The recording section 84 is directly connected to the identification signal rewriting circuit 54. The VTR 84 receives a video signal from the identification signal rewriting circuit 54, and records the received video signal on a magnetic tape. The VTR 84 reproduces the video signal from the magnetic tape. In the case where the video signal outputted from the identification signal rewriting circuit 54 agrees with a Color plus signal, the recording and reproducing processes tend to contaminate the Color plus signal with jitter components.

A time base corrector (TBC) 82 receives a video signal reproduced by the VTR 84. The time base corrector 82 responds to a reference signal generated by a reference oscillator 83. In the case where the reproduced video signal agrees with a Color plus signal, the time base corrector 82 removes jitter components from the Color plus signal in response to the reference signal. Thus, the time base corrector 82 converts the reproduced Color plus signal into a jitter-free Color plus signal. The time base corrector 82 outputs the jitter-free Color plus signal to a later stage.

The time base corrector 82 includes a memory, a writing section, and a reading section. The reference oscillator 83 includes a crystal oscillator outputting a fixed-frequency reference signal to the time base corrector 82. The reference signal is used by the time base corrector 82 as a clock signal. In the time base corrector 82, the reproduced Color plus signal is written into the memory by the writing section. Then, the Color plus signal is read out from the memory by the reading section in response to the clock signal. Writing and reading the reproduced Color plus signal into and from the memory remove jitter components. The Color plus signal which has been read out from the memory is a jitter-free Color plus signal outputted from the time base corrector 82.

The video signal transmission system 81 includes an identification signal extracting circuit 73 and an identification signal rewriting circuit 75A which receive the output video signal of the time base corrector 82.

The identification signal extracting circuit 73 serves to extract an identification signal from a time segment of the received video signal which corresponds to the 23-rd line of every given field. The identification signal extracting circuit 73 outputs the extracted identification signal to a decision circuit 74. The identification signal extracting circuit 73 also serves to detect the absence of an identification signal from the received video signal. The identification signal extracting circuit 73 informs the decision circuit 74 of the detected signal absence.

The decision circuit 74 serves to determine whether or not the bit b5 of the identification signal is "0", that is, whether or not the output video signal of the time base corrector 82 agrees with a Color plus composite video signal. It should be noted that the bit b5 of an identification signal in a Color plus signal recorded and reproduced by the VTR 84 is changed to "0" by the operation of the identification signal rewriting circuit 54. The decision circuit 74 generates a control signal in response to the state of the bit b5 of the identification signal and also the signal absence information, and outputs the control signal to the identification signal rewriting circuit 75A. The decision circuit 74 includes, for example, a comparator which compares the bit b5 of the identification signal with a preset signal of "1".

The identification signal rewriting circuit 75A changes between an active state and a through state in response to the control signal fed from the decision circuit 74. When the decision circuit 74 finds the bit b5 of the identification signal to be "0", that is, when the decision circuit 74 finds the output signal of the time base corrector 82 to be a Color plus composite video signal, the identification signal rewriting circuit 75A is activated by the output signal of the decision circuit 74 so that the identification signal rewriting circuit 75A changes the bit b5 of the identification signal from "0" to "1". Thus, in this case, the identification signal rewriting circuit 75A changes the received video signal into a Color plus composite video signal in which the bit b5 of an information signal is "1". The identification signal rewriting circuit 75A outputs the resultant Color plus composite video signal to an external apparatus (not shown) via an output terminal 76.

A description will now be given of the case where the Color plus composite video signal outputted from the video signal transmission system 81 is fed to the television receiver 31 of Fig. 10. As understood from the previous description, in the Color plus composite video signal received by the television receiver 31, the bit b5 of the identification signal is "1". Thus, in this case, the switch 36 in the television receiver 31 selects the set of the output signals of the Y/C separation circuit 32 in response to the switch control signal from the decision circuit 35, and the set of the output signals of the Y/C separation circuit 32 which corresponds to the received Color plus composite video signal is visualized by the CRT 38. Since the Color plus composite video signal fed to the television receiver 31 is made free from jitter components by the operation of the time base corrector 82, the Y/C separation circuit 32 can execute reliable Y/C separation on the received Color plus composite video signal. In addition, the Y/C separation circuit 32 is adapted to the Color plus system. Therefore, a reproduced picture on the screen of the CRT 38 has a good quality.

### Eighth Embodiment

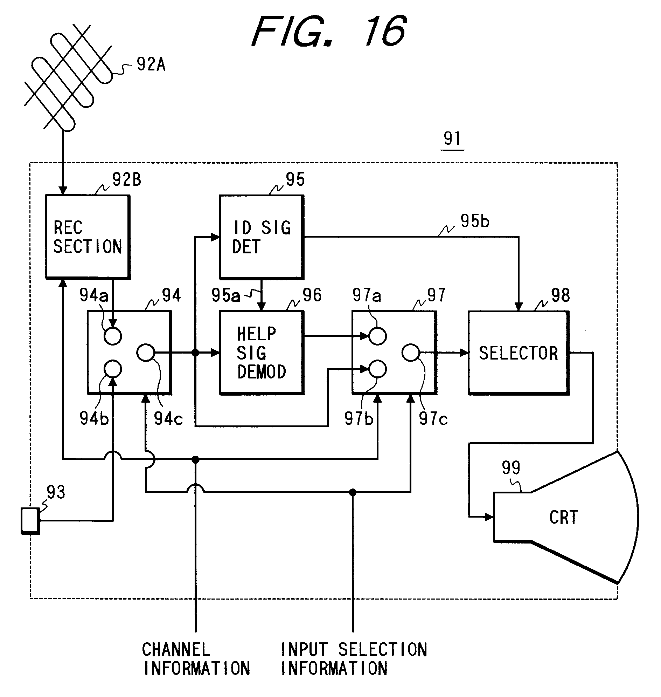

Fig. 16 shows an extended definition television receiver 91 according to an eighth embodiment of this invention. As shown in Fig. 16, the extended definition television receiver 91 includes a receiving section or a tuner 92B. RF television signals in different channels are caught by an antenna 92A, and are then fed to the receiving section 92B. Each of the RF television signals agrees with an RF television signal of the PALplus system or an RF television signal of the current PAL system. The receiving section 92B is supplied with channel information set by a user. The receiving section 92B selects one of the RF television signals in response to the channel information, and converts the selected RF television signal into a video signal. The selected RF television signal is in the channel designated by the channel information. The receiving section 92B outputs the video signal to a switch 94. The output video signal of the receiving section 92B agrees with a PALplus composite video signal or a PAL composite video signal.

The extended definition television receiver 91 includes an input terminal 93 connected to the switch 94. A composite video signal can be transmitted via the input terminal 93 to the switch 94 from an external apparatus such as a home-use VTR for the current PAL system.

The switch 94 includes two fixed contacts 94a and 94b and one movable contact 94c. The fixed contact 94a receives the video signal from the receiving section 92B. The fixed contact 94b is connected to the input terminal 93. The movable contact 94c leads to an identification signal detector 95, a helper signal demodulator 96, and a switch 97. The switch 94 includes a control terminal fed with input selection information set by the user. The movable contact 94c connects with one of the fixed contacts 94a and 94b in response to the input selection information. Thus, the switch 94 selects one of the video signal outputted from the receiving section 92B and the video signal fed via the input terminal 93 in response to the input selection information. The switch 94 transmits the selected video signal to the identification signal detector 95, the helper signal demodulator 96, and the switch 97.

The identification signal detector 95 serves to detect an identification signal in the video signal outputted from the switch 94. The identification signal detector 95 generates control signals 95a and 95b in response to the detected identification signal. The identification signal detector 95 outputs the control signal 95a to the helper signal demodulator 96. The identification signal detector 95 outputs the control signal 95b to a selector 98.

The identification signal detector 95 finds the output video signal of the switch 94 to be of the PALplus system or the PAL system in response to the detection of the identification signal. For example, the control signal 95a is in a high-level state when the identification signal is detected, that is, when the output video signal of the switch 94 agrees with a PALplus signal. The control signal 95a is in a low-level state when an identification signal is absent, that is, when the output video signal of the switch 94 agrees with a PAL signal. Similarly, the control signal 95b depends on whether the output video signal of the switch 94 agrees with a PALplus signal or a PAL signal.

The helper signal demodulator 96 receives the video signal from the switch 94. The helper signal demodulator 96 receives the control signal 95a from the identification signal detector 95. The helper signal demodulator 96 serves to recover a helper signal from the video signal in response to the control signal 95a. The helper signal demodulator 96 converts the video signal into a vertical-resolution-improved video signal in response to the recovered helper signal. The helper signal demodulator 96 outputs the vertical-resolution-improved video signal to the switch 97.

The switch 97 includes two fixed contacts 97a and 97b and one movable contact 97c. The fixed contact 97a receives the video signal from the helper signal demodulator 96. The fixed contact 97b receives the video signal from the switch 94. The movable contact 97c leads to the selector 98. The switch 97 includes control terminals fed with the channel information and the input selection information respectively. The movable contact 97c connects with one of the fixed contacts 97a and 97b in response to the channel information and the input selection information. Thus, the switch 97 selects one of the video signal outputted from the helper signal demodulator 96 and the video signal outputted from the switch 94 in response to the channel information and the input selection information. The switch 97 transmits the selected video signal to the selector 98.

The selector 98 receives the video signal from the switch 97. The selector 98 transmits the video signal to a CRT 99. The selector 98 receives the control signal 95b from the identification signal detector 95. The selector 98 is connected to the CRT 99. The selector 98 changes conditions of the CRT 99 in response to the control signal 95b. The changed conditions relate to the aspect ratio of an effective frame of every picture on the screen of the CRT 99. For example, the selector 98 changes the level of voltages to deflection coils of the CRT 99 to control the size (the aspect ratio) of an effective indication area of every picture on the screen of the CRT 99. Every picture represented by the video signal is visualized on the screen of the CRT 99 with an aspect ratio determined by the control signal 95b.

Alternatively, the selector 98 may change conditions of the output signal of the switch 97 in response to the control signal 95b. The changed conditions relate to the aspect ratio and the signal format. In this case, the selector 98 outputs a resultant video signal to the CRT 99. Every picture represented by the output video signal from the selector 98 is visualized on the screen of the CRT 99.

A description will now be given of the case where the input selection information requires selection of the video signal outputted from the receiving section 92B, and the video signal outputted from the receiving section 92B agrees with a PALplus composite video signal. In this case, the switch 94 selects the output PALplus signal of the receiving section 92B in response to the input selection information. Thus, the PALplus signal outputted from the receiving section 92B is transmitted via the switch 94 to the identification signal detector 95, the helper signal demodulator 96, and the switch 97.

The identification signal detector 95 detects an identification signal in the output signal of the switch 94. The identification signal detector 95 finds the output signal of the switch 94 to be of the PALplus system in response to the detection of the identification signal. The identification signal detector 95 generates the control signals 95a and 95b in response to the detection of the identification signal. The identification signal detector 95 outputs the control signal 95a to the helper signal demodulator 96. In addition, the identification signal detector 95 outputs the control signal 95b to the selector 98.

The helper signal demodulator 96 is activated by the control signal 95a. Accordingly, the helper signal demodulator 96 recovers a helper signal from the PALplus signal outputted by the switch 94. The helper signal demodulator 96 converts the PALplus signal into a resolution-improved PALplus signal in response to the recovered helper signal. The helper signal demodulator 96 outputs the resolution-improved PALplus signal to the switch 97.

The switch 97 selects the output video signal of the helper signal demodulator 96, that is, the resolution-improved PALplus signal, in response to the input selection information. The switch 97 transmits the selected PALplus signal to the selector 98. The PALplus signal travels to the CRT 99 via the selector 98. Every picture represented by the PALplus signal is visualized on the screen of the CRT 99. In response to the control signal 95b, the selector 98 sets the aspect ratio of every picture on the screen of the CRT 99 to a value (16:9) suited for the PALplus system.

A description will now be given of the case where the input selection information requires selection of the video signal fed via the input terminal 93, and the video signal contains an identification information and is reproduced by a home-use VTR for the PAL system. The video signal fed via the input terminal 93 agrees with a PALplus signal or a PAL signal. In response to the input selection information, the switch 94 selects the video signal fed via the input terminal 93. Thus, the video signal fed via the input terminal 93 is transmitted via the switch 94 to the identification signal detector 95, the helper signal demodulator 96, and the switch 97.

The identification signal detector 95 detects an identification signal in the output video signal from the switch 94. The identification signal detector 95 generates the control signal 95b in response to the detected identification signal. The identification signal detector 95 outputs the control signal 95b to the selector 98.

In response to the input selection information, the switch 97 selects the video signal outputted from the switch 94 rather than the output output signal of the helper signal demodulator 96. It should be noted that a PALplus signal reproduced by the home-use VTR has an impaired helper signal, and therefore the output signal of the helper signal demodulator 96 is poor in picture quality when such an impaired PALplus signal is fed to the helper signal demodulator 96. The switch 97 transmits the selected video signal to the selector 98. The video signal travels to the CRT 99 via the selector 98. Every picture represented by the video signal is visualized on the screen of the CRT 99. In response to the control signal 95b, the selector 98 sets the aspect ratio of every picture on the screen of the CRT 99 to a value suited for the video signal.

The receiving section 92B is designed to also accept an RF television signal from a home-use VTR for the PAL system via specified one of the channels. In the case of acceptance of the RF television signal from the VTR, the input selection information requires selection of the output video signal of the receiving section 92B while the channel information denotes the specified channel. In this case, the switch 94 selects the output video signal of the receiving section 92B in response to the input selection information. In addition, the switch 97 selects the output video signal of the switch 94 rather than the output video signal of the helper signal demodulator 96 in response to the channel information.

The extended definition television receiver 91 may include another input terminal exclusively for a normal PALplus signal fed from an external apparatus such as a decoding apparatus of the PALplus system. The PALplus input terminal is connected to the identification signal detector 95 and the helper signal demodulator 96 so that the PALplus signal can travel from the PALplus input terminal to the identification signal detector 95 and the helper signal demodulator 96. In this case, the extended definition television receiver 91 is provided with a sensor for detecting whether or not an external video signal is applied to the PALplus input terminal. The sensor is connected to the switch 97. When the external video signal (the PALplus signal) is applied to the PALplus input terminal, the switch 97 selects the output video signal of the helper signal demodulator 96 in response to the output signal of the sensor.

Another modification of the extended definition television receiver 91 includes a helper signal detector for detecting whether or not a helper signal is present in the output video signal of the switch 94. The helper signal detector is connected to the switch 97. In this case, the switch 97 is not fed with the input selection information and the channel information. When a helper signal is present in the output video signal of the switch 94, the switch 97 selects the output video signal of the helper signal demodulator 96. Otherwise, the switch 97 selects the output video signal of the switch 94.

## Claims

1. A video signal recording apparatus for recording an input video signal on a recording medium, the input video signal containing a main signal having video information, a helper signal having plural added information pieces for improving a quality of the main signal, and an identification signal for identifying types of the added information pieces, the apparatus comprising:
control means for generating a control signal related to a type of an added information piece unsuited to record;
rewriting means for rewriting and disabling at least part of the identification signal in response to the control signal; and
recording means for recording an output signal of the rewriting means on the recording medium.

2. An apparatus according to claim 1 wherein the identification signal has a sequence of plural bits and is inserted into a time segment of the input video signal which corresponds to a given line, the control means comprising:
means responsive to the input video signal for detecting the time segment of the input video signal which corresponds to the given line and which contains the identification signal; and
means for generating a control signal related to a given bit among the bits of the identification signal, the given bit representing a type of an added information piece unsuited to record; and said rewriting means comprises:
means for detecting a position of the given bit in the given line detected by the first means in response to the control signal; and
means for rewriting and disabling the identification signal at only the bit position detected by the third means.

3. A video signal recording and reproducing apparatus comprising an apparatus according to claim 1 or 2 and reproducing means for reproducing the recorded signal from the recording medium.

4. An apparatus according to claim 3 further comprising:
means for selecting one of the input video signal and the signal reproduced by the reproducing means, and outputting the selected signal.

5. An apparatus for according to claim 3 further comprising:
means for selecting one of the input video signal, the signal reproduced by the reproducing means, and the output signal of the rewriting means, and outputting the selected signal.

6. A video signal indicating apparatus for an input video signal containing a main signal having video information, a helper signal having plural added information pieces for improving a quality of the main signal, and an identification signal for identifying types of the added information pieces, the apparatus comprising:
a display means (26);
first control means (24) for controlling the display means the input video signal to display;
detecting means (27) for detecting the identification signal in the input video signal;
means for generating a control signal in response to the identification signal detected by the detecting means;
means (29) for changing an effective display area of the input video signal on the display means in response to the control signal;
means (22) for disabling the input video signal and converting the input video signal into a video mute signal; and
means (23) for selecting one of the input video signal and the video mute signal in response to the control signal, and outputting the selected signal to the display.

7. An apparatus comprising:
first means for recording a video signal on a recording medium, the video signal containing an identification signal representing a type of the video signal; and
second means for changing the identification signal before the identification signal contained in the video signal is recorded by the first means.

8. An apparatus comprising:
first means for detecting the occurrence of a change of an input video signal between a PAL video signal and a PALplus video signal, and generating a control signal representative thereof;
second means for generating a video mute signal; and
third means connected to the second means and being responsive to the control signal generated by the first means for displaying the video mute signal when the means for detecting detects the presence of the change, and for displaying the input video signal when the means for detecting detects the absence of the change.

9. A video signal transmission system for transmitting a video signal to an extended definition television receiver via a video signal recording and reproducing apparatus, comprising:
first means for detecting whether or not the video signal contains an identification signal;
second means for detecting whether or not the identification signal represents that the video signal is of an extended definition type and is unsuited to transmission to the extended definition television receiver via the video signal recording and reproducing apparatus;
third means for, in cases where the first means detects that the video signal contains the identification signal and where the second means detects that the identification signal represents that the video signal is of the extended definition type and is unsuited to transmission to the extended definition television receiver via the video signal recording and reproducing apparatus, rewriting the identification signal into a state representing that the video signal is not of the extended definition type during one of recording and reproduction of the video signal by the video signal recording and reproducing apparatus; and
fourth means for transmitting the video signal with the rewritten identification signal to the extended definition television receiver;
wherein the rewritten identification signal causes the extended definition television receiver from executing extended definition processing on the video signal.

10. A video signal transmission system for transmitting a video signal to an extended definition television receiver via a video signal recording and reproducing apparatus, comprising:
first means for detecting whether or not the video signal contains an identification signal;
second means for detecting whether or not the identification signal is in a first state representing that the video signal is of an extended definition type and is unsuited to transmission to the extended definition television receiver via the video signal recording and reproducing apparatus;
third means for, in cases where the first means detects that the video signal contains the identification signal and where the second means detects that the identification signal is in the first state, rewriting the identification signal into a second state representing that the video signal is not of the extended definition type during recording of the video signal by the video signal recording and reproducing apparatus;
fourth means for removing a time-base variation component from the video signal which has been reproduced by the video signal recording and reproducing apparatus;
fifth means for returning the identification signal in the output video signal of the fourth means to the first state; and
sixth means for transmitting the video signal from the fifth means to the extended definition television receiver;
wherein the identification signal in the first state enables the extended definition television receiver to execute extended definition processing on the video signal.

11. An extended definition television receiver comprising:
first means for receiving an RF extended definition television signal and converting the received RF extended definition television signal into an extended definition video signal;
second means for selecting one of the extended definition video signal outputted from the first means and a video signal fed from an external apparatus. and outputting the selected video signal;
third means for detecting an identification signal in the output video signal of the second means;
fourth means for executing extended definition processing on the output video signal of the second means in response to detection of the identification signal by the third means;
fifth means for selecting one of the output video signal of the second means and the output video signal of the fourth means, and outputting the selected video signal; and
sixth means for visualizing the output video signal of the fifth means.

12. A video signal transmission system for transmitting a video signal from a video signal recording and reproducing apparatus, comprising:
first means for removing a time-base variation component from the output video signal of the video signal recording and reproducing apparatus, wherein the output video signal of the video signal recording and reproducing apparatus contains an identification signal in a first state representing that the video signal is not of an extended definition type;
second means for rewriting the identification signal in the output video signal of the first means to a second state representing that the video signal is of the extended definition type; and
third means for transmitting the video signal from the second means as a transmission-system output signal.
